(19) Europäisches Patentamt
European Patent Office
Office européen des brevets

(11) **EP 2 009 536 B1**

(12) **EUROPÄISCHE PATENTSCHRIFT**

(45) Veröffentlichungstag und Bekanntmachung des Hinweises auf die Patenterteilung:
**28.07.2010 Patentblatt 2010/30**

(51) Int Cl.:
**G05D 23/19** (2006.01)

(21) Anmeldenummer: **08010091.0**

(22) Anmeldetag: **03.06.2008**

(54) **Verfahren und Vorrichtung zur Einstellung der Heizleistungsreserve**

Method and device for setting the heating reserve

Procédé et dispositif destinés à l'ajustage de la réserve de puissance de chauffe

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.06.2007 DE 102007029631**

(43) Veröffentlichungstag der Anmeldung:
**31.12.2008 Patentblatt 2009/01**

(73) Patentinhaber: **Techem Energy Services GmbH**
**65760 Eschborn (DE)**

(72) Erfinder:
• **Kähler, Arne, Dr.**
**12683 Berlin (DE)**
• **Schulz, Hans-Jürgen**
**61381 Friedrichsdorf (DE)**

(74) Vertreter: **KEIL & SCHAAFHAUSEN**
**Patentanwälte**
**Cronstettenstraße 66**
**60322 Frankfurt am Main (DE)**

(56) Entgegenhaltungen:
**EP-A- 0 121 200 EP-A- 0 445 310**
**EP-A- 1 508 751 EP-B- 1 456 727**
**DE-A1- 3 614 607 DE-B3-102006 013 098**

• **RICHTER W. ET AL: "Zur Bestimmung der dezentralen Heizleistungsreserve in Niedrigenergiehäusern unter Berücksichtigung dynamischer Betriebsverhältnisse" TECHNISCHE UNIVERSITÄT DRESDEN - KURZBERICHT, [Online] Mai 2005 (2005-05), XP002501011 Gefunden im Internet: URL:http://www.bbr.bund.de/nn_21788/DE/For schungsprogramme/ FoerderungBauforschung/En ergieeinsparungTechnischeGebaeudeausruest u ng/Downloads/DL__2471,templateId=raw, prope rty=publicationFile.pdf/DL_2471.pdf> [gefunden am 2008-10-20]**

**Beschreibung**

Die Erfindung betrifft ein Verfahren und eine Vorrichtung zur Einstellung der Heizleistungsreserve an den Heizkörpern und/oder in einem Heizkreis einer insbesondere einen oder mehrere regelbare Heizkreise aufweisenden Heizungsanlage, beispielsweise einer Warmwasserheizungsanlage.

Bei derartigen Heizungsanlagen erfolgt die Leistungsanpassung der zentralen Heizungsversorgung typischerweise durch Veränderung der Vorlauftemperatur oder des Massestromes des als Heizmittel dienenden flüssigen Wärmeträgers (meist Wasser) bzw. durch eine Kombination der Veränderung von Vorlauftemperatur und Massestrom. Die Regelung der Raumtemperatur erfolgt in einer derartigen Heizungsanlage mittels Variation des Heizkörpermassestromes, d.h. des Massestromes des Heizmittels durch den Heizkörper selbst. Typischerweise erfolgt bei derartigen Anlagen die Erfassung und Verteilung der Wärmemenge für die Raumheizung mittels elektronischer Heizkostenverteiler nach dem 2- oder 3-Fühlerprinzip.

Das Anwendungsgebiet der vorliegenden Erfindung betrifft somit insbesondere Heizungsanlagen, in denen an den Heizkörperzuleitungen

    a) die Variation des Massestromes mittels Heizkörperventilen erfolgt,
    b) die Regelung der Raumtemperatur mit Thermostatventilen erfolgt,
    c) die Regelung der Raumtemperatur mit elektronisch gesteuerten Ventilen erfolgt,
    d) die Variation des Massestromes mittels elektronisch gesteuerter Pumpen erfolgt und/oder
    e) die Regelung der Raumtemperatur mit elektronisch gesteuerten Pumpen erfolgt

und in denen an den Heizkörpern

    f) elektronische Heizkostenverteiler nach dem 2-Fühlerprinzip installiert sind, welche jeweils eine heizkörper- und eine raumluftseitige Temperatur erfassen oder
    g) elektronische Heizkostenverteiler nach dem 3-Fühlerprinzip oder andere geeignete Geräte installiert sind, welche die Heizmittelvorlauf-, die Heizmittelrücklauf- und die Raumlufttemperatur oder die Heizmittelvorlauf- und eine heizkörperseitige und eine raumluftseitige Temperatur oder die Heizmittelrücklauf- und eine heizkörperseitige und eine raumluftseitige Temperatur erfassen.

Somit ist die vorliegende Erfindung in nahezu allen Heizungsanlagen, insbesondere Warmwasserheizungsanlagen, einsetzbar, da diese aufgrund der geltenden Vorschriften die vorstehenden Merkmale bereits aufweisen oder entsprechende Einrichtungen leicht nachinstalliert werden können.

In derzeit üblichen Warmwasserheizungsanlagen wird die Raumlufttemperatur mittels einer Variation des Heizmittelstromes durch die Heizkörper eingestellt. Zu diesem Zweck werden in den Zuleitungen zu den Heizkörpern entweder elektronisch oder thermostatisch betriebene Heizkörperventile oder auch elektronisch betriebene dezentrale Pumpen eingesetzt. In der überwiegenden Zahl der heute installierten Warmwasserheizungsanlagen wird die Vorlauftemperatur der Heizungsanlage nach der Außentemperatur und die zentrale Heizungsumwälzpumpe drehzahlkonstant oder nach einem Sollwert des Differenzdrucks über der Pumpe geführt. Eine Anpassung der an die Gebäudeheizungsanlage bzw. die einzelnen Heizkreise übergebenen Heizleistung an den tatsächlichen Bedarf erfolgt bei diesen Heizungsanlagen noch nicht.

Beispielsweise aus der EP 1 456 727 B1 oder der EP 1 645 928 A1 sind fortschrittliche Verfahren bekannt, die es ermöglichen, eine bedarfsgeführte Anpassung der Vorlauftemperatur oder des Massenstromes der Heizungsanlage durchzuführen. Ziel dieser Verfahren ist es, die zentrale Vorlauftemperatur und/oder den Massenstrom des Heizmittels der zentralen Heizungsanlage so anzupassen, dass entweder Sollwerte oder Sollwertbereiche von Heizkörperventileinstellungen oder auch Heizkörperversorgungszustände eingehalten werden.

Diese vorgenannten Verfahren setzten jedoch entweder die Kenntnis der Hubstellungen der Heizkörperventile oder die Kenntnis von Heizkörpertemperaturen in Kombination mit zuvor ermittelten Kennlinien voraus. Die Kenntnis der Ventilhubstellungen ist nicht in jeder Heizungsanlage einfach zu erreichen. Die Ermittlung von Kennlinien, die in Verbindung mit leicht ermittelbaren Heizkörpertemperaturen ebenso eine bedarfsgeführte Anpassung der Vorlauftemperatur oder des Massenstroms der Heizungsanlage ermöglichen, ist auch mit einem hohen messtechnischen Aufwand typischerweise auf Heizkörperprüfständen verbunden. Die ermittelten Kennlinien gelten ferner nur für die dem Messaufbau entsprechenden Positionen der Heizkostenverteiler auf der Heizkörperoberfläche, beispielsweise 0,5 Heizkörperlänge und 0,75 Heizkörperhöhe.

Die DE 10 2006 013 098 B3 beschreibt ein Verfahren zur bedarfsgeführten Wärmebereitstellung in einer Heizungsanlage, der in Abhängigkeit von einer externen Führungsgröße eine vorgegebene Wärmemenge bereitgestellt wird, wobei die bereitgestellte Wärmemenge zusätzlich von dem Wärmebedarf der Heizungsanlage abhängt. Dieser Wärmebedarf der Heizungsanlage wird durch eine Korrekturkurve in Anhängigkeit von der externen Führungsgröße bestimmt. Die Korrekturkurve wird ermittelt, indem der aktuelle Wärmebedarf der Heizungsanlage als Regelgröße einer Regelung verwendet wird, die als Korrekturgröße einen aktuellen Korrekturwert ausgibt, wobei die Anpassung der Korrekturkurve unter Mittelung der aktuellen Korrekturwerte während der vorgegebenen Zeitperiode erfolgt.

Aufgabe der vorliegenden Erfindung ist es daher, mit einfacheren Mitteln eine bedarfsgeführte Wärmebereitstellung in einer Heizungsanlage zu ermöglichen.

Diese Aufgabe wird erfindungsgemäß mit den Merkmalen der unabhängigen Ansprüche 1 und 10 durch ein Verfahren und eine Vorrichtung zur Einstellung der Heizleistungsreserve in einem Heizkreis gelöst. Dabei werden für mehrere, vorzugsweise jeden regelbaren Heizkörper eines Heizkreises der Heizungsanlage im laufenden Betrieb eine Heizkörper-Leistungsreserve bestimmt und aus den einzelnen Heizkörper-Heizleistungsreserven eine Heizkreis-Heizleistungsreserve als Regelgröße ermittelt. Ferner wird eine Soll-Heizleistungsreserve als Sollwert der Heizkreis-Heizleistungsreserve ermittelt bzw. vorgegeben. In einer Regelung der Heizleistungsreserve wird dann aus der Abweichung der Regelgröße Heizkreis-Heizleistungsreserve von dem Sollwert Soll-Heizleistungsreserve eine Führungs- oder Korrekturgröße zur Einwirkung auf den Heizkreis bzw. die dem Heizkreis durch die Heizungsanlage zur Verfügung gestellten Wärmeleistung ermittelt.

Es hat sich erfindungsgemäß herausgestellt, dass durch die Berücksichtigung der vergleichsweise einfach zu ermittelnden Heizleistungsreserve der Heizkörper in einem Heizkreis eine Regelung für die Heizkreis-Heizleistungsreserve geschaffen werden kann, die die benötigte Heizleistungsreserve in dem Heizkreis für einen komfortablen Betrieb optimal einstellt und dabei als wärmebedarfsgeführte Regelung ein energetisch unsinniges und teures Überangebot von in der Heizungsanlage zur Verfügung gestellter Wärmemenge vermeidet. Im Falle mehrerer regelbarer Heizkreise in einer Heizungsanlage wird das vorgeschlagene Verfahren vorzugsweise für jeden regelbaren Heizkreis durchgeführt, so dass für jeden Heizkreis die optimale Wärmemenge eingestellt und damit die gesamte Heizungsanlage wärmebedarfsgeführt geregelt wird. Falls nur ein Heizkreis vorhanden ist, kann das Verfahren in Kessel-Heizungsanlagen auch für die bedarfsgeführte Regelung der Kesseltemperatur eingesetzt werden. Das in verschiedenen Varianten vorgeschlagene Verfahren stellt also eine Art Vorregelung für eine Heizungsregelung oder Heizungssteuerung dar, welche eine Vorlauftemperatur und/oder einen Massestrom des Heizmittels für einen Heizkreis beispielsweise außentemperaturgesteuert führt oder aufgrund anderer Regelgrößen eigenständig regelt. So wird eine optimierte Einstellung der Heizleistungsreserve in dem Heizkreis und insbesondere für die Heizkörper in dem Heizkreis sowie eine bedarfsoptimierte Regelung der Heizungsanlage mit hohem Heizkomfort geschaffen, da an den jeweiligen Heizkörpern eine ausreichende Regelreserve zur Verfügung steht.

Der Begriff "Heizleistungsreserve" soll dabei als eine Größe verstanden werden, welche die Differenz zwischen der Wärmeleistung bei aktueller Vorlauftemperatur und Nennmassestrom und aktueller Wärmeleistung des Heizkörpers in das Verhältnis zu einer Wärmeleistung bei aktueller Vorlauftemperatur und Nennmassestrom setzt. Anstelle der Heizleistungsreserve in der vorstehenden Definition kann auch des "Betriebsleistungsverhältnis" verwendet werden, welches die aktuelle Wärmeleistung des Heizkörpers in das Verhältnis zu einer Wärmeleistung bei aktueller Vorlauftemperatur und Nennmassestrom setzt. Der Zusammenhang zwischen "Heizleistungsreserve" und Betriebsleistungsverhältnis lässt sich durch die Beziehung "Heizleistungsreserve = 1- Betriebsleistungsverhältnis" herstellen. Beide einfach ineinander überführbare Größen können für den vorliegenden Zweck in gleicher Weise verwendet werden, so dass nachfolgend weitestgehend auf eine Differenzierung verzichtet wird und beide Größen vereinfachend als "Heizleistungsreserve" bezeichnet werden. Ferner soll der Begriff "Heizleistungsreserve" im Folgenden technisch äquivalente Begriffe und Definitionen umfassen, welche die Leistungsreserve eines Heizkörpers beschreiben, die sich aus der Leistung bei aktueller Vorlauftemperatur und Nennmassestrom erreichen ließe.

Das erfindungsgemäß vorgeschlagene Verfahren eignet sich deshalb so gut für die Realisierung einer wärmeleistungsadaptiven Heizungsregelung, weil die Heizleistungsreserve für einen Heizkörper mit einfachen Mitteln bestimmt werden kann. So wird gemäß einer besonders bevorzugten Ausführungsform des erfindungsgemäßen Verfahrens vorgeschlagen, dass die Heizleistungsreserve für jeden Heizkörper aus für den Heizkörper gemessenen Temperaturen ermittelt wird, insbesondere aus den von Heizkostenverteilern oder anderen geeigneten Messvorrichtungen mit 2- oder 3 Fühlermessungen erfassten Temperaturdaten der Heizkörper, wie beispielsweise den Heizkörperübertemperaturen. Besonders einfach kann die Heizleistungsreserve erfindungsgemäß aus dem Verhältnis der aktuellen logarithmischen Übertemperatur zu der logarithmischen Übertemperatur bei aktueller Vorlauftemperatur und dem Nennmassestrom ermittelt werden, indem dieses Verhältnis mit dem für jeden Heizkörper beispielsweise aus seinen Datenblättern bekannten Heizkörperexponenten potenziert wird.

Die Ermittlung der Heizkreis-Heizleistungsreserve aus den einzelnen Heizkörper-Heizleistungsreserven kann erfindungsgemäß durch eine insbesondere gewichtete Mittelwertbildung oder durch die Anwendung einer Fuzzy-Logic erfolgen. Die gewichtete Mittelwertbildung oder eine Fuzzy-Logic ermöglichen eine stärkere Gewichtung von Heizkörpern mit geringerer Heizleistungsreserve (beziehungsweise hohem Betriebsleistungsverhältnis), um auch an diesen Heizkörpern eine ausreichende Heizleistungsreserve zur Verfügung zu stellen und den Heizungskomfort insgesamt zu verbessern.

Als Korrekturgröße kann erfindungsgemäß eine Änderung der Vorlauftemperatur und/oder des Massestromes des Heizkreises verwendet werden. In einer alternativen Ausführungsform kann als Korrekturgröße auch eine Änderung des Sollwertes vor Vorlauftemperatur und/oder des Massestromes einer insbesondere nachgelagerten Heizungsregelung verwendet werden. In diesen Fällen wirkt die Korrekturgröße also als Korrektursignal auf einen eigenständigen Regler der Heizungsanlage, welcher die auf die Heizungsanlage unmittelbar einwirkende Stellgröße erzeugt.

Als Führungsgröße kann auch der Sollwert der Vorlauftemperatur und/oder des Massestroms verwendet werden und somit bspw. unmittelbar eine Führungsgröße für den Wärmeerzeuger, wie einen Heizkessel, oder Wärmeübertrager der Heizungsanlage, wie im Rahmen einer Fernwärmeheizung, sein.

Sowohl bei Anwendung einer Führungs- als auch einer Korrekturgröße kann die Heizungsanlage eine außentemperaturgeführte Heizungsanlage sein, so dass die resultierende Stellgröße beispielsweise eine Verschiebung der verwendeten Heizkennlinie bewirkt.

Mit diesen vorbeschriebenen Möglichkeiten zur Einwirkung auf die Heizungsanlage werden typische Fälle herkömmlicher Heizungsanlagen abgedeckt. Erfindungsgemäß ist die vorgeschlagene Lösung jedoch nicht auf diese Arten beschränkt. Wesentlich ist, dass eine auf den Wärmeerzeuger bzw. Wärmeverteiler einer Heizungsanlage einwirkende Führungs- oder Korrekturgröße erzeugt und in eine Stellgröße umgesetzt wird, die in einer eigenständigen, der Heizungsregelung oder Heizungssteuerung vorgelagerten Regelung einen gewünschten Sollwert der Heizkreis-Heizleistungsreserve einstellt.

Gemäß einer besonders bevorzugten Ausführungsform des erfindungsgemäßen Verfahrens kann die Soll-Heizleistungsreserve als Sollwert der Regelgröße Heizkreis-Heizleistungsreserve für den bzw. jeden regelbaren Heizkreis in Abhängigkeit der Außentemperatur, der Vorlauftemperatur und/oder der Tageszeit gleitend geführt werden. Hierdurch lässt sich mit einfachen Mitteln eine wesentliche Komfortverbesserung gegenüber den bekannten Verfahren zur Regelung einer Heizungsanlage erreichen, bei denen insbesondere für Anheizprozesse, die typischerweise nach Phasen einer sogenannten Nachtabsenkung (gezielte zeitliche Absenkung der Vorlauftemperatur um einen festen Betrag, typischerweise 5 bis 10 Kelvin in einem Zeitraum zwischen etwa 23 Uhr und 5 Uhr) oder nach längeren Abwesenheitszeiten der Bewohner auftreten, besonders hohe Heizleistungen erforderlich sind. Diese besonders hohen Heizleistungen müssen typischerweise innerhalb von ein bis zwei Stunden bereitgestellt werden, da die berechtigten Komfortanforderungen der Bewohner ein Aufheizen der Nutzräume auf Raum-Solltemperatur innerhalb von ein bis zwei Stunden vorsehen, wie in der Norm DIN EN 12831 angegeben.

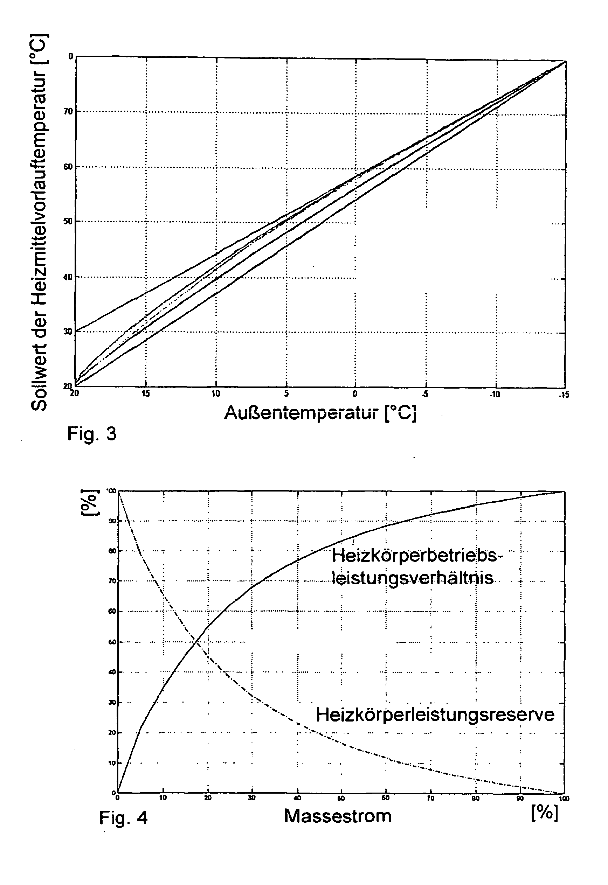

Die aktuelle Außentemperatur und - wegen der Abhängigkeit von der Heizkurve gemäß Fig. 3 - indirekt auch die aktuelle Vorlauftemperatur werden in den bekannten Regelverfahren für die Optimierung der Anheizleistung nicht berücksichtigt. Dies führt bei relativ hohen Außentemperaturen an der Heizgrenze und daraus resultierenden niedrigen Vorlauftemperaturen, die aus den Heizkurven errechnet werden, zu a priori niedrigen, häufig zu geringen Heizleistungsreserven, die auch mit den eingangs beschriebenen Vorlauftemperaturadaptionsverfahren nicht ausreichend kompensiert werden. Dies lässt sich durch die vorgelagerte Regelung der Heizleistungsreserve erfindungsgemäß einfach und intuitiv verbessern.

Dabei kann zusätzlich vorgesehen sein, dass die Zeitabhängigkeit der Soll-Heizleistungsreserve für den bzw. jeden regelbaren Heizkreis tagestyp- und tageszeitabhängig selbsttätig erlernt wird, indem das Nutzungsverhalten in den beispielsweise letzten zwei Wochen oder über einen anderen geeigneten Zeitraum extrapoliert wird.

Erfindungsgemäß kann aus der Regelabweichung zwischen der Heizkreis-Heizleistungsreserve und der Soll-Heizleistungsreserve mittels eines P- oder PI-Regelgesetzes oder mittels quasi stationärer Algorithmen, welche insbesondere die Abhängigkeit der Heizleistungsreserve von der Außentemperatur berücksichtigen können, eine Korrektur- oder Führungsgröße zur Vorgabe der Stellgröße ermittelt werden. Dies kann in einem Optimierer erfolgen. Der Vorgang kann zweistufig ablaufen, indem zunächst eine Korrekturgröße (insbesondere Änderung der Vorlauftemperatur und/oder des Massestroms) ermittelt wird, die anschließend in eine Führungsgröße (insbesondere resultierende Sollwerte für die die Vorlauftemperatur und/oder den Massestrom nach erfolgter Korrektur) überführt wird. Erfindungsgemäß können Korrektur- und Stellgröße jedoch auch identisch sein und in einem einstufigen Prozess bestimmt werden. Anschließend wird die resultierende Führungsgröße in eine an die jeweilige Heizungsanlage angepasste Stellgröße (bspw. Pumpendrehzahl, Stellventilhub in dem Heizungsanlagen-Vorlauftemperaturregler) umgewandelt.

Die Erfindung betrifft insbesondere auch eine Vorrichtung zur Einstellung der Heizleistungsreserve in einem Heizkreis oder mehreren Heizkreisen einer Heizungsanlage mit einem Regler zur Ermittlung einer Korrektur- oder Führungsgröße zur Einwirkung auf den Heizkreis bzw. die dem Heizkreis oder den Heizkreisen durch die Heizungsanlage zur Verfügung gestellten Wärmeleistung. Hierzu ist erfindungsgemäß vorgesehen, dass der Regler ein Modul zur Berechnung von Heizkörper-Heizleistungsreserven aus Heizkörpertemperaturwerten inklusive Vor- oder Rücklauftemperaturen, ein Modul zur Berechnung einer Heizkreis-Heizleistungsreserve aus den einzelnen Heizkörper-Heizleistungsreserven und ein Modul zur Ermittlung einer Soll-Heizleistungsreserve und zur Auswertung einer Regelabweichung zwischen der Soll-Heizleistungsreserve und der Heizkörper-Heizleistungsreserve für die Ermittlung einer Stellgröße aufweist. Die vorgenannten Module sind insbesondere zur Durchführung des vorbeschriebenen Verfahrens eingerichtet und können durch in einem oder mehreren Moduleinheiten vorgesehene Recheneinheiten, beispielsweise Mikrocontroller, realisiert werden.

Erfindungsgemäß weist die Vorrichtung auch an die Heizkörper angeschlossene Messeinrichtungen, insbesondere Heizkostenverteiler, zur Erfassung der Heizkörpertemperaturen und mindestens einen damit verbundenen Datensammler auf, wobei der Datensammler mit dem Modul zur Berechnung der Heizkörper-Heizleistungsreserven verbunden ist. Vorzugsweise ist auch mindestens ein Vorlauftemperaturfühler an dem Vorlauf der Heizungsanlage oder dem oder jedem Heizkreis zu Erfassung der Vorlauftemperaturen vorgesehen.

Ferner ist der Regler gemäß einer bevorzugten Ausführungsform der Erfindung direkt mit einer Heizungsanlage verbunden. In dieser Verbindung stellt die erfindungsgemäße Vorrichtung insbesondere auch eine Wärmeleistungsadaptionsregelung für eine Heizungsanlage dar, in welcher der Regler unmittelbar dazu eingerichtet ist, eine konkrete Heizungsanlage mit Korrektur- oder Führungsgrößen zu versorgen.

Die Verbindung zwischen den einzelnen Modulen, Messeinrichtungen und/oder dem oder den Datensammler (n) ist gemäß einer bevorzugten Ausführungsform der Erfindung eine Funkverbindung, kann jedoch ganz oder teilweise auch durch andere Kommunikationsverbindungen ersetzt sein. Hierfür kommen elektrische Kabel- oder Busverbindungen, optische Verbindungen oder dergleichen in Frage.

Auch können einzelne Module oder Geräte zusammengefasst sein, so dass die verschiedenen Teilaufgaben der Module durch dieselbe Recheneinheit ausgeführt wird, die zur Durchführung der unterschiedlichen Verfahrensschritte eingerichtet ist. Beispielsweise kann durch die Zusammenfassung der Berechnungsmodule mit den Datensammlern dahingehend ein synergetischer Effekt erreicht werden, dass die für die Berechnungen der einzelnen Heizkörper-Heizleistungsreserven notwendigen Temperaturdaten der Heizkörper ohnehin vorhanden sind.

Weitere Merkmale, Vorteile und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/ oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:

Fig. 1    einen Signalflussplan für das erfindungsgemäße Verfahren zur Einstellung der Heizleistungsreserve;

Fig. 2    eine erfindungsgemäße Vorrichtung zur Einstellung der Heizleistungsreserve in Heizkreisen;

Fig. 3    herkömmliche stationäre Heizungskurven;

Fig. 4    das Heizkörper-Betriebsleistungsverhältnis und die Heizkörper-Heizleistungsreserve aufgetragen gegen den Heizkörpermassestrom bei einer Vorlauftemperatur;

Fig. 5    das Heizkörper-Betriebsleistungsverhältnis und die Heizkörper-Heizleistungsreserve aufgetragen gegen die aktuelle logarithmische Übertemperatur;

Fig. 6    das Soll-Betriebsleistungsverhältnisses und die Soll-Heizleistungsreserve aufgetragen gegen die Außentemperatur.

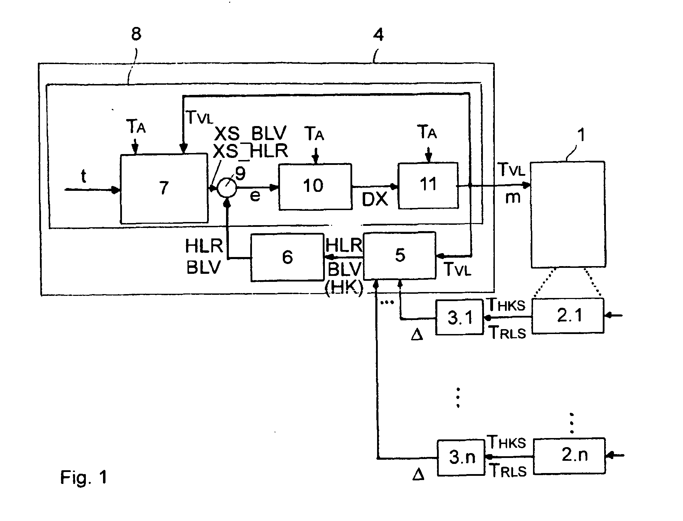

In Fig. 1 ist das Verfahren zur Einstellung der Heizleistungsreserve für einen Heizkreis einer Heizungsanlage 1 schematisch dargestellt, welche Heizkörper 2.1 bis 2.n mit einem Heizmedium versorgt. Typischerweise ist die Heizungsanlage 1 eine Warmwasserheizungsanlage.

Jedem Heizkörper 2.1 bis 2.n ist zur Erfassung der abgegebenen Wärmemenge ein Heizkostenverteiler 3.1 bis 3.n zugeordnet, welcher heizkörperseitige Temperaturen $T_{HKS}$ und raumluftseitige Temperaturen $T_{RLS}$ messen und hieraus Heizkörperübertemperaturen $\Delta$ ermittelt. Abweichend von der Darstellung in Fig. 1 können die Übertemperaturen $\Delta$ auch in einem zentralen, in Fig. 1 nicht dargestellten Datensammler aus den von den Heizkostenverteilern 3 übertragenen Temperaturwerten ausgerechnet werden.

Bei den Heizkostenverteilern 3 kann es sich um beispielsweise funkkommunikationsfähige Heizkostenverteiler nach dem 2- oder 3-Fühlerprinzip oder andere geeignete Messvorrichtungen zur Erfassung und Übertragung von 2- oder 3-Heizkörpertemperaturen handeln.

Entsprechend der verschiedenen Ausführungsformen der Heizkostenverteiler 3 gibt es verschiedene Möglichkeiten zur Berechnung der Heizkörperübertemperatur $\Delta$.

In einer ersten Variante lässt sich eine logarithmische Heizkörperübertemperatur $\Delta_{log}$ für Heizkostenverteiler nach dem 2-Fühlerprinzip wie folgt berechnen:

$$\Delta_{Log} = \frac{\vartheta_{VL} - \vartheta_{RL}}{\ell n \left( \frac{\vartheta_{VL} - \vartheta_{L}}{\vartheta_{RL} - \vartheta_{L}} \right)} = K_{CW} \cdot K_{CL} \cdot \Delta_{HKV} : \qquad \Delta_{Log} = K_{CW} \cdot K_{CL} \cdot \Delta_{HKV}$$

mit

$$K_{CW} = \frac{1}{1 - c_{HF}}$$    ... wasserseitiger Korrekturfaktor

$$K_{CW} = \frac{1}{1 - c_{RF}}$$    ... raumluftseitiger Korrekturfaktor

$$\Delta_{FHKV} = \vartheta_{HKS} - \vartheta_{RLS}$$    ... Temperaturdifferenz des Heizkostenverteilers

$\vartheta_{HKS}$    ... heizkörperseitige Temperatur des Heizkostenverteilers

$\vartheta_{RLS}$    ... raumluftseitige Temperatur des Heizkostenverteilers.

Die heizkörperspezifischen Korrekturfaktoren $K_{CW}$ und $K_{CL}$ werden aus den entsprechenden heizkörperspezifischen C-Werten berechnet, die für jeden Heizkörper in der gängigen Praxis der Heizkostenerfassung sowieso bekannt sind. In der heutigen Praxis der Heizkostenverteilung werden als C-Werte bzw. als Korrekturfaktoren feste Werte verwendet.

Alternativ kann die Berechnung der logarithmischen Heizkörperübertemperatur $\Delta_{\log}$ für Heizkostenverteiler nach dem 2-Fühlerprinzip in einer zweiten Variante auch wie folgt erfolgen:

$$\Delta_{Log} = \frac{\vartheta_{VL} - \vartheta_{RL}}{\ell n \left( \frac{\vartheta_{VL} - \vartheta_{L}}{\vartheta_{RL} - \vartheta_{L}} \right)} = \frac{\Delta\vartheta_{VL} - \Delta\vartheta_{RL}}{\ell n \left( \frac{\Delta\vartheta_{VL}}{\Delta\vartheta_{RL}} \right)} = \frac{\Delta\vartheta_{VL} - \Delta\vartheta_{RL}}{\ell n (\Delta\vartheta_{VL}) - \ell n (\Delta\vartheta_{RL})} :$$

$$\Delta_{Log} = \frac{\Delta\vartheta_{VL} - \Delta\vartheta_{RL}}{\ell n (\Delta\vartheta_{VL}) - \ell n (\Delta\vartheta_{RL})},$$

wobei

$$\Delta\vartheta_{VL} = \vartheta_{VL} - \vartheta_{Luft}$$    ... die Vorlaufübertemperatur des Heizkörpers und

$$\Delta\vartheta_{RL} = \vartheta_{RL} - \vartheta_{Luft}$$    ... die Rücklaufübertemperatur des Heizkörpers

sind. Ferner gelten folgende Beziehungen:

$$\Delta\vartheta_{VL} \approx \Delta\vartheta_{VL,Heizkreis}$$    ... Vorlaufübertemperatur des Heizkreises

(fortgesetzt)

|  | ... | Vorlaufübertemperatur des Heizkreises (wird zentral gemessen und übertragen). |

$$\Delta\vartheta_{VL,Heizkreis} = \vartheta_{VL,Heizkreis} - \vartheta_{Luft,Heizkreis}$$

Die Rücklaufübertemperatur $\Delta\vartheta_{RL}$ wird aus der theoretischen Heizkörpergleichung $\Delta\vartheta_h = \Delta\vartheta_{VL}^h \cdot \vartheta_{RL}^{(1-h)}$ ermittelt:

$$\Delta\vartheta_{RL} = e^{y_{RL}} = \exp(y_{RL}),$$

$$y_{RL} = \ln(\Delta\vartheta_{RL}) = \frac{1}{(1-h)} \cdot \left[\ln(\Delta_{FHKV} \cdot K_{Korr}) - h \cdot \ln(\Delta_{VL})\right],$$

mit

$$\Delta_{FHKV} = \vartheta_{HKS} - \vartheta_{RLS}$$

|  | ... | Temperaturdifferenz des Heizkostenverteilers in Montagehöhe h (h=1 entspricht dem Vorlauf, h=0 entspricht dem Rücklauf) |
| $K_{Korr}$ | ... | Korrekturfaktor |
| $\vartheta_{HKS}$ | ... | heizkörperseitige Temperatur des Heizkostenverteilers |
| $\vartheta_{RLS}$ | ... | raumluftseitige Temperatur des Heizkostenverteilers |
|  | ... | Vorlaufübertemperatur des Heizkreises |

$$\Delta\vartheta_{VL} \approx \Delta\vartheta_{VL,Heizkreis}$$

|  | ... | Vorlaufübertemperatur des Heizkreises (wird zentral gemessen und übertragen). |

$$\Delta\vartheta_{VL,Heizkreis} = \vartheta_{VL,Heizkreis} - \vartheta_{Luft,Heizkreis}$$

Ähnlich kann die Berechnung der logarithmischen Heizkörperübertemperatur $\Delta_{log}$ für Heizkostenverteiler nach dem 3-Fühlerprinzip in einer ersten Variante erfolgen:

$$\Delta_{Log} = \frac{\vartheta_{VL} - \vartheta_{RL}}{\ln\left(\dfrac{\vartheta_{VL} - \vartheta_{Luft}}{\vartheta_{RL} - \vartheta_{Luft}}\right)},$$

wobei

| $\vartheta_{VL}$ | ... | Vorlauftemperatur des Heizkörpers; |
| $\vartheta_{RL}$ | ... | Rücklauftemperatur des Heizkörpers; |
| $\vartheta_{Luft}$ | ... | Umgebungslufttemperatur des Heizkörpers |

sind.

Anstelle von Heizkostenverteilern kann auch ein Messvorrichtung zum Einsatz kommen, die folgende Temperaturen erfasst:

| $\vartheta_{VL}$ | ... | Vorlauftemperatur des Heizkörpers; |
| $\vartheta_{RL}$ | ... | Rücklauftemperatur des Heizkörpers; |

$\vartheta_{Luft}$   ...   Umgebungslufttemperatur des Heizkörpers.

In einer zweiten Variante des 3-Fühler-Prinzips kann die Heizkörperübertemperatur $\Delta_{log}$ wie folgt berechnet werden;

$$\Delta_{Log} = \frac{\vartheta_{VL} - \vartheta_{RL}}{\ell n \left( \frac{\vartheta_{VL} - \vartheta_{L}}{\vartheta_{RL} - \vartheta_{L}} \right)} = \frac{\Delta\vartheta_{VL} - \Delta\vartheta_{RL}}{\ell n \left( \frac{\Delta\vartheta_{VL}}{\Delta\vartheta_{RL}} \right)} = \frac{\Delta\vartheta_{VL} - \Delta\vartheta_{RL}}{\ell n(\Delta\vartheta_{VL}) - \ell n(\Delta\vartheta_{RL})} :$$

$$\Delta_{Log} = \frac{\Delta\vartheta_{VL} - \Delta\vartheta_{RL}}{\ell n(\Delta\vartheta_{VL}) - \ell n(\Delta\vartheta_{RL})},$$

wobei

| | | |
|---|---|---|
| | ... | Vorlaufübertemperatur des Heizkörpers |
| $\Delta\vartheta_{VL} = \vartheta_{VL} - \vartheta_{Luft}$ | | |
| $\vartheta_{VL}$ | ... | Vorlauftemperatur des Heizkörpers |
| $\vartheta_{Luft}$ | ... | Raumlufttemperatur am Heizkörper (ersatzweise Messung im Raum) |
| | ... | Rücklaufübertemperatur des Heizkörpers |
| $\Delta\vartheta_{RL} = \vartheta_{RL} - \vartheta_{Luft}$ | | |

sind. Optional können anstelle $\Delta\vartheta_{VL}$

| | | |
|---|---|---|
| | ... | Vorlaufübertemperatur des Heizkreises |
| $\Delta\vartheta_{VL} \approx \Delta\vartheta_{VL,Heizkreis}$ | | |
| | ... | Vorlaufübertemperatur des Heizkreises (wird zentral gemessen und übertragen) |
| $\Delta\vartheta_{VL,Heizkreis} = \vartheta_{VL,Heizkreis} - \vartheta_{Luft,Heizkreis}$ | | |

bestimmt werden. Die Rücklaufübertemperatur $\Delta\vartheta_{RL}$ ergibt sich aus der theoretischen Heizkörpergleichung $\Delta\vartheta_{h} = \Delta\vartheta_{VL}^{h} \cdot \vartheta_{RL}^{(1-h)}$ als

$$\Delta\vartheta_{RL} = e^{y_{RL}} = \exp(y_{RL})$$

$$y_{RL} = \ln(\Delta\vartheta_{RL}) = \frac{1}{(1-h)} \cdot \left[ \ln(\Delta_{HK}(h) \cdot K'_{Korr}) - h \cdot \ln(\Delta_{VL}) \right]$$

mit:

| | | |
|---|---|---|
| | ... | Temperaturdifferenz am Heizkörper in Höhe h (h=1 entspricht dem Vorlauf, h=0 entspricht dem Rücklauf) |
| $\Delta_{HK}(h) = \vartheta_{HK}(h) - \vartheta_{Luft}$ | | |
| $K'_{Korr}$ | ... | Korrekturfaktor |

$\vartheta_{HK}(h)$ ... Heizkörper-Oberflächentemperatur in Höhe h (h=1 entspricht dem Vorlauf, h=0 entspricht dem Rücklauf)

$\vartheta_{Luft}$ ... Raumlufttemperatur am Heizkörper (ersatzweise Messung im Raum).

Die Messung von $\vartheta_{VL}$ oder/und $\vartheta_{HK}(h)$ oder/und $\vartheta_{Luft}$ kann mit beliebiger Messtechnik erfolgen.

Ferner wird eine logarithmischen Heizkörperübertemperatur $\Delta_{\log,100}$ bei Nennmassestrom (bei Nennmassestrom oder Auslegungsmassestrom) wie folgt ermittelt:

$$\Delta_{Log,100} = \frac{\vartheta_{VL} - \vartheta_{RL,100}}{\ell n\left(\frac{\vartheta_{VL} - \vartheta_{Luft}}{\vartheta_{RL,100} - \vartheta_{Luft}}\right)} = \frac{\Delta_{VL} - \Delta_{RL,100}}{\ell n\left(\frac{\Delta_{VL}}{\Delta_{RL,100}}\right)} \approx \frac{\Delta_{VL,Heizkreis} - \Delta_{RL,100}}{\ell n\left(\frac{\Delta_{VL,Heizkreis}}{\Delta_{RL,100}}\right)} :$$

$$\Delta_{Log,100} \approx \frac{\Delta_{VL,Heizkreis} - \Delta_{RL,100}}{\ell n\left(\frac{\Delta_{VL,Heizkreis}}{\Delta_{RL,100}}\right)} ,$$

wobei:

... Vorlaufübertemperatur des Heizkörpers

$$\Delta\vartheta_{VL} = \vartheta_{VL} - \vartheta_{Luft}$$

... Vorlauftemperatur des Heizkörpers

$$\vartheta_{VL} \approx \vartheta_{VL,Heizkreis}$$

... Umgebungslufttemperatur des Heizkörpers

$$\vartheta_{Luft} \approx \vartheta_{Luft,Heizkreis}$$

... Vorlaufübertemperatur des Heizkreises

$$\Delta\vartheta_{VL} \approx \Delta\vartheta_{VL,Heizkreis}$$

... Vorlaufübertemperatur des Heizkreises (Die Vorlaufübertemperatur des Heizkreises $\Delta\vartheta_{VL,Heizkreis}$ kann somit zentral am Heizkessel oder am Gebäudeeintritt der Heizungsanlage erfasst werden.)

$$\Delta\vartheta_{VL,Heizkreis} = \vartheta_{VL,Heizkreis} - \vartheta_{Luft,Heizkreis}$$

$\Delta\vartheta_{RL,100}$ ... Rücklaufübertemperatur des Heizkörpers bei Nenn- oder Auslegungsmassestrom und aktueller Vorlaufübertemperatur

sind.

Der Nenn. oder Auslegungsmassenstrom wird als

$$\Delta_{RL,100} = \Delta_{RL}\left(\frac{\dot{m}}{\dot{m}_{100}} = 1\right) = \left(M_{xP} + \Delta\vartheta_{VL}^{1-n}\right)^{1/(1-n)}$$

definiert mit:

n:               Heizkörperexponent (aus Herstellerunterlagen)

...           Vorlaufübertemperatur des Heizkreises

$$\Delta\vartheta_{VL} \approx \Delta\vartheta_{VL,Heizkreis}$$

fester Parameter für Auslegungspunkt AP

$$M_{xP} = \left(\Delta_{RL,xP}^{\,1-n} - \Delta_{VL,xP}^{\,1-n}\right):$$

Heizkörper-Rücklauf-Auslegungsübertemperatur

$$\Delta_{RL,xP} = \left(\vartheta_{RL} - \vartheta_{Luft}\right)_{xP}:$$

Heizkörper-Vorlauf-Auslegungsübertemperatur.

$$\Delta_{VL,xP} = \left(\vartheta_{VL} - \vartheta_{Luft}\right)_{xP}:$$

Für Auslegungspunkt gilt: xP = AP. Die Auslegungsparameter der Heizungsanlage $\Delta_{RL,AP}$, $\Delta_{VL,AP}$ sind typischerweise aus den Planungsunterlagen bekannt. Ersatzweise können auch die Heizkörperparameter des Normpunktes (Vorlauf/Rücklauf/Luft-Temperatur = 90/70/20 ˚C) nach DIN EN 442 verwendet werden:

fester Parameter für Normpunkt NP;

$$M_{NP} \cong \left(\Delta_{RL,NP}^{\,1-n} - \Delta_{VL,NP}^{\,1-n}\right)$$

Heizkörper-Rücklaufübertemperatur für Normpunkt;

$$\Delta_{RL,NP} = \left(\vartheta_{RL} - \vartheta_{Luft}\right)_{NP}$$

Heizkörper-Vorlaufübertemperatur für Normpunkt.

$$\Delta_{VL,NP} = \left(\vartheta_{VL} - \vartheta_{Luft}\right)_{NP}$$

Mit diesen wie zuvor beschrieben bestimmten Heizkörperübertemperaturen $\Delta$ ermittelt ein in der erfindungsgemäßen Vorrichtung vorgesehener Regler 4 zur Ermittlung einer Stellgröße zur Einwirkung auf den Heizkreis der Heizungsanlage 1 in einem Modul 5 für jeden Heizkörper 2.1 bis 2.n eine Heizkörper-Heizleistungsreserve HLR_HK.

Die Heizkörper-Heizleistungsreserve HLR_HK kann dabei wie folgt bestimmt werden, wobei zunächst ein Heizkörper-Betriebsleistungsverhältnis BLV_HK entsprechend folgender Beziehung ausgerechnet wird:

$$BLV\_HK = \frac{\dot{Q}_{akt}}{\dot{Q}_{100/\vartheta_{VLT}}} \cong \frac{\dot{Q}_N \cdot \left(\dfrac{\Delta_{Log,akt}}{\Delta_{Log,Nenn}}\right)^n}{\dot{Q}_N \cdot \left(\dfrac{\Delta_{Log\,100}}{\Delta_{Log,Nenn}}\right)^n} = \left(\frac{\Delta_{Log,akt}}{\Delta_{Log,100}}\right)^n:$$

$$BLV\_HK = \left(\frac{\Delta_{Log}}{\Delta_{Log,100}}\right)^n,$$

mit

$\Delta_{log,Nενν}$   ...      logarithmische Übertemperatur im Heizkörper-Normpunkt, z.B. im Heizkörper-Normpunkt (90,70,20): $\Delta_{log,60}$ = 59,44 $K$ ;

n         ...      Heizkörperexponent (für jeden Heizkörper bekannt);

$\Delta_{Log}$     ...      aktuelle logarithmische Übertemperatur.

Das Heizkörper-Betriebsleistungsverhältnis BLV_HK ergibt sich also in einfacher Weise aus dem Verhältnis von Heizköperübertemperaturen $\Delta$. Das Heizkörper-Betriebsleistungsverhältnis BLV_HK lässt sich über die Beziehung

$$HLR\_HK = 1 - BLV\_HK$$

einfach in eine Heizkörper-Heizleistungsreserve HLR_HK umrechnen. Da beide Größen äquivalent sind, wird nachfolgend meist nur von "Heizleistungsreserve" gesprochen. Diese Terminologie schließt die in dem Regler 4 in gleicher Weise verwendbare Größe Betriebsleistungsverhältnis mit ein.

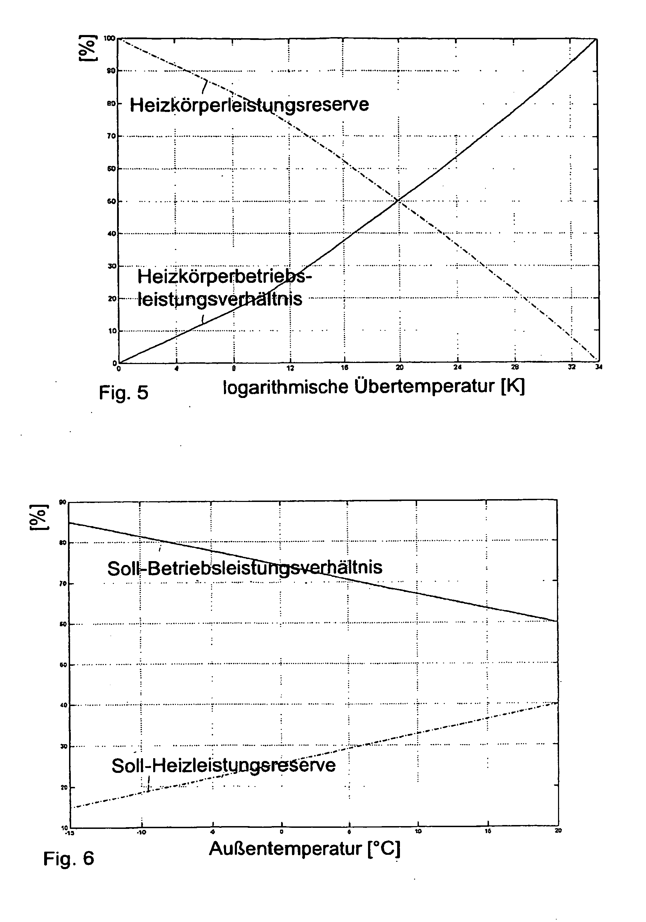

In Fig. 4 ist ein typischer Verlauf einer Heizkörper-Heizleistungsreserve bzw. eines Heizkörper-Betriebsleistungsverhältnisses als Funktion des auf den Auslegungsmassestrom bezogenen Massestrom eines Heizkörpers für eine typische Vorlauftemperatur dargestellt. Wie zu erwarten, nimmt die Heizleistungsreserve mit zunehmendem Massestrom ab, weil die Differenz zu dem maximal möglichen Massestrom durch den Heizkörper kleiner wird und die Wärmeabgabe von dem Massestrom abhängt. Fig. 5 zeigt den Verlauf der Heizkörper-Heizleistungsreserve bzw. des Heizkörper-Betriebsleistungsverhältnisses als Funktion der aktuellen logarithmischen Übertemperatur.

Die Berechnung der Heizkreis-Heizleistungsreserven HLR erfolgt für jeden regelbaren Heizkreis aus allen Einzelwerten der diesem Heizkreis zugeordneten Heizkörper-Heizleistungsreserven HLR_HK mittels gewichteter Mittelwertbildung und/oder durch Anwendung einer Fuzzy-Logic in einem Modul 6 zur Berechnung der Heizkreis-Heizleistungsreserve.

Dabei wird im Sinne der Vermeidung von Diskomfortzuständen im Ergebnis der Verfahrensanwendung die Gewichtung bzw. die Fuzzy-Logic so entworfen, dass Heizkörper 2 mit geringer Heizleistungsreserve HLR_HK bzw. mit hohem Betriebsleistungsverhältnis BLV_HK stärker gewichtet werden.

Als Maß für hohe oder kleine Heizleistungsreserve gilt der Sollwert für die Heizleistungsreserve XS_HLR, der in einem nachfolgend nach näher beschriebenen Modul 7 zur Sollwertbestimmung erzeugt wird:

- HLR_HK < XS_HLR: kleine HLR -> hohe Gewichtung (g>1);
- HLR_HK = XS_HLR: Soll-HLR -> Nenn-Gewichtung (g=1);
- HLR_HK > XS_HLR: große HLR -> kleine Gewichtung (g< 1);

Entsprechendes gilt natürlich für den Sollwert für das Betriebsleistungsverhältnis XS_BLV:

- BLV_HK> XS_BLV: großes BLV -> hohe Gewichtung (g>1)
- BLV_HK = XS_BLV: Soll-BLV -> Nenn-Gewichtung (g=1)
- BLV_HK < XS_BLV: kleines BLV -> kleine Gewichtung (g<1)

Für die gewichtete Mittewertbildung gilt:

$$HLR = \frac{1}{\sum_{N\_HK} g_{HK}} \cdot \sum_{N\_HK} g_{HK} \cdot HLR_{HK} \quad ,$$

mit
$HLR_{HK}$ ... Einzelwerte der Heizkörper-Heizleistungsreserven
N_HK ... Anzahl der berücksichtigten Heizkörper
bzw. analog:

$$BLV = \frac{1}{\sum_{N\_HK} g_{HK}} \cdot \sum_{N\_HK} g_{HK} \cdot BLV_{HK} \quad ,$$

mit
$BLV_{HK}$ ... Einzelwerte der Heizkörper-Heizleistungsreserven;
N_HK ... Anzahl der berücksichtigten Heizkörper.

Vorteilhaft ist jedoch die Verwendung gleitender Sollwerte, vorzugsweise in Abhängigkeit der Außentemperatur $T_A$, da das Lüftungsverhalten der Nutzer außentemperaturabhängig ist (längere Lüftungsdauer bei höheren Außentemperaturen) und die installierten Heizleistungsreserven gemäß der Basis-Heizkennlinie entsprechend Fig. 3 typischerweise ebenfalls von der Außentemperatur $T_A$ abhängig sind.

Ein linearer Ansatz führt zu folgendem Ergebnis:

$$XS\_BLV = f(\vartheta_{Aussen}, Auslegung) = a \cdot \vartheta_{Aussen} + b,$$

mit

$$a = (XS\_BLV_{TA\_MAX} - XS\_BLV_{TA\_MIN})/(TA\_MAX - TA\_MIN)$$

$$b = XS\_BLV_{TA\_MAX} - a \cdot TA\_MAX$$

| | | |
|---|---|---|
| $\vartheta_{Aussent}$ | ... | Außentemperatur; |
| TA_M | ... | größte Außentemperatur (z.B. Heizgrenztemperatur); |
| TA_MIN | ... | kleinste Außentemperatur (z.B. Auslegungstemperatur); |
| XS_BLV_TA_MAX | ... | zu TA_MAX korrespondierender BLV-Sollwert; |
| XS_BLV_TA_MIN | ... | zu TA_MIN korrespondierender BLV-Sollwert. |

Aus dem Soll-Betriebsleistungsverhältnis XS_BLV kann dann entsprechend die Soll-Heizleistungsreserve XS_HLR = 1 - XS_BLV. berechnet werden. Ein Berechnungsbeispiel für die Sollwerte in Abhängigkeit der Außentemperatur ist in Fig. 6 dargestellt.

In einem Vergleicher 9 wird die Soll-Heizleistungsreserve XS_HLR; XS_BLV mit der Heizkreis-Heizleistungsreserve HLR; BLV verglichen und die Regelabweichung e durch Differenzbildung erzeugt. Aus dieser Regelabweichunge werden in einem Optimierer 10 Korrekturgrößen DX berechnet, wobei aus der Regelungstechnik bekannte Algorithmen verwendet werden.

Hierbei können ein P-Regelgesetz mit der Korrekturgröße:

$$DX = KP * e\_HLR \text{ oder } DX = KP * e\_BLV$$

oder ein PI-Regelgesetz mit der Korrekturgröße:

$$DX = KP \cdot \left( e_{BLV} + \frac{1}{T} \int_t e_{BLV}(\tau)d\tau \right) \text{ bzw. } DX = KP \cdot \left( e_{HLR} + \frac{1}{T} \int_t e_{BLV}(\tau)d\tau \right)$$

zum Einsatz kommen. Alternativ oder ergänzend können quasistationäre Algorithmen eingesetzt werden, die die Abhängigkeit der Heizleistungsreserve HLR und damit auch der Korrekturgröße DX von der Außentemperatur berücksichtigen.

Die Korrekturgröße DX wird in einer bspw. als Regler der Vorlauftemperatur $T_{VL}$ und/oder des Massestroms m Schnittstelle 11, die selbst ebenso wie der Optimierer 10 als zusätzliche Eingangsgröße die Außentemperatur aufweisen kann, in eine Stellgröße zur unmittelbaren Beeinflussung der Heizungsanlage umgewandelt. Die resultierenden Größen sind in dem in Fig. 1 dargestellten Beispiel die Vorlauftemperatur $T_{VL}$ und der Massenstrom m.

Das vorstehend mit Bezug auf Fig. 1 beschriebene Verfahren besteht also aus drei wesentlichen Komponenten:

1. Zyklische, d.h. sich zeitlich in bestimmten Abständen wiederholende Berechnung der Heizkreis-Heizleistungsreserve HLR (oder BLV) aus den Heizkörper-Heizleistungsreserven HLR_HK (oder BLV_HK);

2. Zyklische Berechnung des Sollwertes der Heizkreis-Heizleistungsreserve $XS_{HLR}$ (oder $XS_{BLV}$);

3. Zyklische Berechnung der Korrektur von Vorlauftemperatur oder Massenstrom des entsprechenden Heizkreises.

Durch diese Maßnahmen wird die in der Heizungsanlage 1 an den jeweiligen Heizkörpern 2 zur Verfügung stehende Heizleistungsreserve optimiert und eine in Bezug auf die zur Verfügung stehende Wärmeleistung optimierte und adaptierte Regelung für eine Heizungsanlage1 zur Verfügung gestellt.

Zusammenfassend werden die wesentlichen Verfahrensschritte nachfolgend noch einmal kurz in der Übersicht dargestellt.

Es wird also ein Verfahren zur automatischen Einstellung und Regelung der Heizleistungsreserve von Heizkörpern in Warmwasserheizungsanlagen vorgeschlagen, das

(a) die Regelgröße 'Betriebsleistungsverhältnis' oder 'Heizleistungsreserve' analytisch ohne Kenntnis von Kennlinien berechnet;

(b) die Regelgröße 'Betriebsleistungsverhältnis' oder 'Heizleistungsreserve' für jeden regelbaren Heizkreis aus den Einzelwerten 'Betriebsleistungsverhältnis' oder ‚Heizleistungsreserve' der Einzelheizkörper ermittelt;

(c) die Zwischengrößen 'Betriebsleistungsverhältnis' oder 'Heizleistungsreserve' für jeden Heizkörper aus gemessenen Temperaturen errechnet;

(d) die Änderung des Sollwertes der Vorlauftemperatur oder des Massestromes der einzelnen regelbaren Heizkreise oder auch eine Kombination aus beiden als Stellgröße verwendet;

(e) alternativ zu d) die Änderung der Vorlauftemperatur oder des Massestromes der einzelnen regelbaren Heizkreise oder auch eine Kombination aus beiden als Stellgröße verwendet;

(f) den Sollwert der Regelgröße ‚Betriebsleistungsverhältnis' oder ‚Heizleistungsreserve' für jeden regelbaren Heizkreis in Abhängigkeit der Außentemperatur gleitend führt;

(g) alternativ zu f) den Sollwert der Regelgröße ‚Betriebsleistungsverhältnis' oder 'Heizleistungsreserve' für jeden regelbaren Heizkreis in Abhängigkeit der Vorlauftemperatur gleitend führt;

(h) infolge sich wiederholender Tagesabläufe die Zeitabhängigkeit des Sollwert der Regelgröße 'Betriebsleistungsverhältnis' oder 'Heizleistungsreserve' für jeden regelbaren Heizkreis tagestyp- und tageszeitabhängig erlernt.

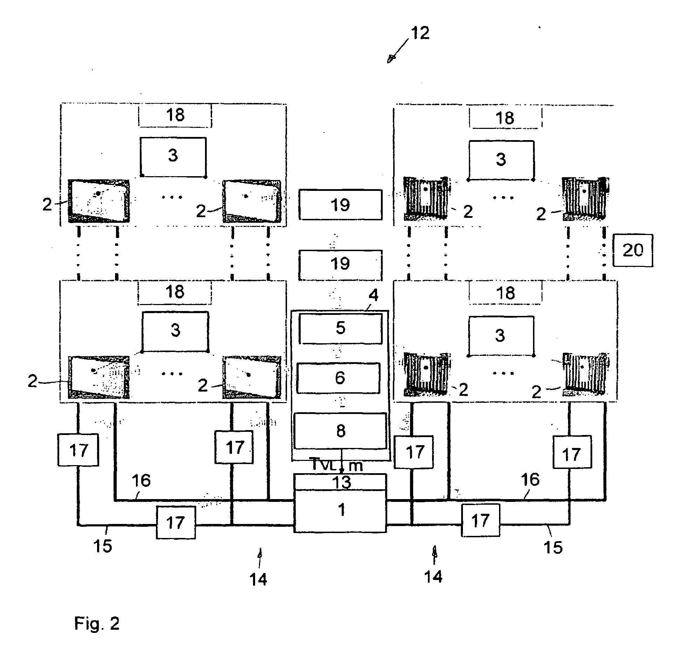

Mit Bezug auf Fig. 2 wird nachfolgend eine erfindungsgemäße Vorrichtung 12 zur Einstellung der Heizleistungsreserve beschrieben. Diese weist einen erfindungsgemäßen Regler 4 zur Ermittlung einer Korrektur- oder Fürhungsgröße DX, wie bspw. eine Änderung der Vorlauftemperatur $T_{VL}$ oder Massestrom m, auf, die einem Heizungsregier 13 einer Heizungsanlage 1 zugeführt wird.

Die Heizungsanlage 1 ist in dem dargestellten Beispiel aus zwei Heizkreisen 14 mit jeweils einem Vorlauf 15 zu den einzelnen Heizkörpern 2 und einem Rücklauf von den Heizkörpern 2 zurück zu der Heizungsanlage 1 aufgebaut. In dem Bereich des Vorlaufs 15 der Heizkreise 14 befinden sich Vorlauftemperaturfühler 17. An jedem Heizkörpern 2 in den verschiedenen Wohneinheiten 18 ist jeweils ein Heizkostenverteiler 3 angeordnet, der wie vorbeschrieben die Heizkörpertemperaturen erfasst und an Temperatur-Datensammler 19 weiterleitet, die im Funkempfangsbereich der Heizkostenverteiler 3 der Heizkörper 2 angeordnet sind.

Derartige Temperatur-Datensammler 19 werden häufig bereits zur Erfassung der durch die jeweiligen Heizkörper 2 abgegebenen Wärmemenge eingesetzt, wozu die entsprechenden Übertemperaturen $\Delta$ in dem Heizkostenverteiler 3 oder dem Datensammler 19 berechnet werden. Diese Übertemperaturen $\Delta$ werden gemäß der erfindungsgemäßen Vorrichtung 12 an einen Regler 4 zur Ermittlung einer Korrektur- oder Führungsgröße bzw. auch der Stellgröße übertragen, der mit einem Modul 5 zur Berechnung von Heizkörper-Heizleistungsreserven hieraus zunächst eine jedem einzelnen Heizkörper 2 zugeordnete Heizkörper-Heizleistungsreserve HLR_HK berechnet, die dann in einem Modul 6 zur Berechnung der Heizkreis-Heizleistungsreserven HLR zusammengefasst werden. Diese Heizkreis-Heizleistungsreserve HLR wird als Regelgröße einem Modul 8 zur Ermittlung der Soll-Heizleistungsreserve und der auf die Heizungsanlage einwirkenden Stellgröße übermittelt, die wie vorbeschrieben arbeitet.

Die einzelnen Module Datensammler, Heizkostenverteiler und weiterer Geräte kommunizieren wie auch ein zusätzlich vorgesehener Außentemperaturfühler 20 mittels einer Funkkommunikation, die eine besonders einfache, insbesondere auch nachträgliche Installation in Gebäuden ermöglicht.

Damit sind das erfindungsgemäße Verfahren und die erfindungsgemäße Vorrichtung 12 insbesondere in Heizungsanlagen 1 einfach nachrüstbar, die bereits mit elektronischen und kommunikationsfähigen Heizkostenverteilern 3 ausgestattet wurden und die erforderlichen Temperaturdaten übertragen. Im Gegensatz zu bereits eingesetzten Verfahren zur Wärmeleistungsadaption müssen keine verfahrensspezifischen Kennlinien für die Ermittlung von Versorgungszuständen ermittelt werden. Hierdurch fällt der erhebliche messtechnische Aufwand bei der Bestimmung von Koeffizienten und Parametern zur Berechnung der Versorgungszustände weg. Ferner ist das erfindungsgemäße Verfahren in Heizungsanlagen 1 mit variablem Installationsort der Heizkörper-Fühler bzw. Heizkörper-Heizkostenverteiler einsetzbar, da die Ermittlung der Heizleistungsreserve hiervon unabhängig ist. Somit besteht eine besonders einfache Nachrüstbarkeit in bestehenden Heizungsanlagen.

Bezugszeichenliste:

| 1 | Heizungsanlage |
|---|---|
| 2 | Heizkörper (HK) |
| 3 | Heizkostenverteiler (HKV), Messeinrichtung |
| 4 | Regler zur Ermittlung einer Korrektur- oder Führungsgröße |
| 5 | Modul zur Berechnung von Heizkörper-Heizleistungsreserven |
| 6 | Modul zur Berechnung der Heizkreis-Heizleistungsreserve |
| 7 | Modul zur Sollwertbestimmung |
| 8 | Modul zur Ermittlung von Soll-Heizleistungsreserve und Korrektur- oder Führungsgröße |
| 9 | Vergleicher |
| 10 | Optimierer |
| 11 | Schnittstelle, Regler von Vorlauftemperatur und/oder Massestrom |
| 12 | Vorrichtung zur Einstellung der Heizleistungsreserve |
| 13 | Heizungsregler |
| 14 | Heizkreis |
| 15 | Vorlauf |
| 16 | Rücklauf |
| 17 | Vorlauftemperaturfühler |
| 18 | Wohneinheit |
| 19 | Temperatur-Datensammler |
| 20 | Außentemperaturfühler |

| $T_{HKS}$ | heizkörperseitige Temperaturen |
|---|---|
| $T_{RLS}$ | raumluftseitige Temperaturen |
| $T_A$ | Außentemperatur |
| $\Delta$ | Heizkörperübertemperaturen |

| $T_{VL}$ | Vorlauftemperatur der Heizungsanlage |
|---|---|
| m | Massestrom |
| HLR_HK | Heizkörper-Heizleistungsreserve |
| BLV_HK | Heizkörper-Betriebsleistungsverhältnis |
| HLR | Heizkreis-Heizleistungsreserve |
| BLV | Heizkreis-Betriebsleistungsverhältnis |
| XS_HLR | Soll-Heizleistungsreserve |
| XS_BLV | Soll-Betriebsleistungsverhältnis |
| e | Regelabweichung |
| DX | Korrektur- oder Führungsgröße |
| t | Tageszeit |

**Patentansprüche**

1. Verfahren zur Einstellung der Heizleistungsreserve in einem Heizkreis (14) einer Heizungsanlage (1), **dadurch gekennzeichnet, dass** für mehrere Heizkörper (2) eines Heizkreises (14) der Heizungsanlage (1) eine Heizkörper-Heizleistungsreserve (HLR_HK; BLV_HK) bestimmt und aus den einzelnen Heizkörper-Heizleistungsreserven (HLR_HK; BLV_HK) eine Heizkreis-Heizleistungsreserve (HLR; BLV) als Regelgröße ermittelt wird, eine Soll-Heizleistungsreserve (XS_HLR; XS_BLV) als Sollwert der Heizkreis-Heizleistungsreserve (HLR; BLV) ermittelt wird und aus der Abweichung der Regelgröße Heizkreis-Heizleistungsreserve (HLR; BLV) von dem Sollwert Soll-Heizleistungsreserve (XS_HLR; XS_BLV) eine Führungs- oder Korrekturgröße (DX) zur Einwirkung auf den Heizkreis (14) ermittelt wird.

2. Verfahren nach Anspruch 1, **dadurch gekennzeichnet, dass** die Heizkörper-Heizleistungsreserve (HLR_HK; BLV_HK) für jeden Heizkörper (2) aus für den Heizkörper (2) gemessenen Temperaturen ($T_{HKS}$, $T_{RLS}$, $T_{VL}$) ermittelt wird.

3. Verfahren nach Anspruch 1 oder 2, **dadurch gekennzeichnet, dass** die Heizkreis-Heizleistungsreserve (HLR; BLV) mittels gewichteter Mittelwertbildung oder Anwendung einer Fuzzy-Logic aus den Heizkörper-Heizleistungsreserven (HLR_HK; BLV_HK) berechnet wird.

4. Verfahren nach einem der vorhergehenden Ansprüche, **dadurch gekennzeichnet, dass** als Korrekturgröße (DX) eine Änderung der Vorlauftemperatur ($T_{VL}$) und/oder des Massestroms (m) des Heizkreises (14) verwendet wird.

5. Verfahren nach einem der Ansprüche 1 oder 3, **dadurch gekennzeichnet, dass** als Korrekturgröße (DX) eine Änderung des Sollwertes der Vorlauftemperatur ($T_{VL}$) und/oder des Massenstromes (m) verwendet wird.

6. Verfahren nach einem der Ansprüche 1 oder 3, **dadurch gekennzeichnet, dass** als Führungsgröße (DX) der Sollwert der Vorlauftemperatur ($T_{VL}$) und/oder des Massenstromes (m) verwendet wird.

7. Verfahren nach einem der vorhergehenden Ansprüche, **dadurch gekennzeichnet, dass** die Soll-Heizleistungsreserve (XS_HLR; XS_BLV) für den Heizkreis (14) in Abhängigkeit der Außentemperatur ($T_A$), der Vorlauftemperatur ($T_{VL}$) und/oder der Tageszeit (t) gleitend geführt wird.

8. Verfahren nach einem der vorhergehenden Ansprüche, **dadurch gekennzeichnet, dass** die Zeitabhängigkeit der Soll-Heizleistungsreserve (XS_HLR; XS_BLV) für den Heizkreis (14) tagestyp- und tageszeitabhängig erlernt wird.

9. Verfahren nach einem der vorhergehenden Ansprüche, **dadurch gekennzeichnet, dass** die Korrektur- oder Führungsgröße (DX) aus der Regelabweichung (e) zwischen der Heizkreis-Heizleistungsreserve (HLR_HK; BLV_HK) und der Soll-Heizleistungsreserve (XS_HLR; XS_BLV) mittels eines P- oder PI-Regelgesetzes und/oder quasistationärer Algorithmen ermittelt wird.

10. Vorrichtung zur Einstellung der Heizleistungsreserve in einem Heizkreis (14) oder mehreren Heizkreisen (14) einer Heizungsanlage (1) mit einem Regler (4) zur Ermittlung einer Korrektur- oder Führungsgröße (DX) zur Einwirkung auf den Heizkreis (14), **dadurch gekennzeichnet, dass** der Regler (4) ein Modul (5) zur Berechnung von Heizkörper-Heizleistungsreserven (HLR_HK; BLV_HK) aus Heizkörpertemperaturwerten($T_{HKS}$, $T_{RLS}$, $T_{VL}$), ein Modul (6) zur Berechnung einer Heizkreis-Heizleistungsreserve (HLR; BLV) aus den einzelnen Heizkörper-Heizleistungsreserven (HLR_HK; BLV_HK) und ein Modul (8) zur Ermittlung einer Soll-Heizleistungsreserve (XS_HLR; XS_BLV) und zur Auswertung einer Regelabweichung (e) zwischen der Soll-Heizleistungsreserve (XS_HLR; XS_BLV) und der Heizkörper-Heizleistungsreserve (HLR_HK; BLV_HK) für die Ermittlung der Korrektur- oder Führungsgröße (DX) aufweist.

11. Vorrichtung nach Anspruch 10, **dadurch gekennzeichnet, dass** an die Heizkörper (2) angeschlossene Messeinrichtungen (3) zur Erfassung der Heizkörpertemperaturen ($T_{HKS}$, $T_{RLS}$) und mindestens ein damit verbundener Datensammler (19) vorgesehen sind, wobei der Datensammler (19) mit dem Modul (5) zur Berechnung der Heizkörper-Heizleistungsreserven (HLR_HK; BLV_HK) verbunden ist.

12. Vorrichtung nach Anspruch 10 oder 11, **dadurch gekennzeichnet, dass** an dem Vorlauf (15) des Heizkreises (17) der Heizungsanlage (1) mindestens ein Vorlauftemperaturfühler (17) angeordnet ist.

13. Vorrichtung nach einem der Ansprüche 10 bis 12, **dadurch gekennzeichnet, dass** der Regler (4) mit einer Heizungsanlage (1) verbunden ist.

14. Vorrichtung nach einem der Ansprüche 10 bis 13, **dadurch gekennzeichnet, dass** die Verbindung zwischen den einzelnen Modulen, Messeinrichtungen und/oder dem oder den Datensammler(n) eine Funkverbindung ist.

**Claims**

1. A method for setting the heat output reserve in a heating circuit (14) of a heating system (1), **characterised in that** a heater heat output reserve (HLR_HK; BLV_HK) is determined for several heaters (2) in a heating circuit (14) of the heating system (1) and a heating circuit heat output reserve (HLR; BLV) is calculated from the individual heater heat output reserves (HLR_HK; BLV_HK) as the adjustment variable, a target heat output reserve (XS_HLR; XS_BLV) is calculated as the target value of the heating circuit heat output reserve (HLR; BLV) and a guide or adjustment variable (DX) to act on the heating circuit (14) is determined from the deviation between the heating circuit heat output reserve (HLR; BLV) adjustment variable and the target heat output reserve (XS_HLR; XS_BLV) target value.

2. The method according to claim 1, **characterised in that** the heater heat output reserve (HLR_HK; BLV_HK) for each heater (2) is calculated from the temperatures ($T_{HKS}$, $T_{RLS}$, $T_{VL}$) measured for the heaters (2).

3. The method according to claim 1 or 2, **characterised in that** the heating circuit heat output reserve (HLR; BLV) is calculated by determining the weighted average or by using fuzzy logic from the heater heat output reserves (HLR_HK; BLV_HK).

4. The method according to one of the preceding claims, **characterised in that** a change in the flow temperature ($T_{VL}$) and/or mass flow (m) of the heating circuit (14) is used as the adjustment variable (DX).

5. The method according to one of the claims 1 or 3, **characterised in that** a change in the target value of the flow temperature ($T_{VL}$) and/or of the mass flow (m) is used as the adjustment variable (DX).

6. The method according to one of the claims 1 or 3, **characterised in that** the target value of the flow temperature ($T_{VL}$) and/or the mass flow (m) is used as the reference variable (DX).

7. The method according to one of the preceding claims, **characterised in that** the target heat output reserve (XS_HLR; XS_BLV) for the heating circuit (14) is controlled continuously depending on the outside temperature ($T_A$), the flow temperature ($T_{VL}$) and/or the time of day (t).

8. The method according to one of the preceding claims, **characterised in that** the time-dependence of the target heat output reserve (XS_HLR; XS_BLV) is acquired for the heating circuit (14) depending on the type and time of day.

9. The method according to one of the preceding claims, **characterised in that** the adjustment or reference variable (DX) is determined from the standard deviation(e) between the heating circuit heat output reserve (HLR_HK; BLV_HK) and the target heat output reserve (XS_HLR; XS_BLV) by means of a P or PI control law and/or quasi-stationary algorithm.

10. A device for setting the heat output reserve in one heating circuit (14) or several heating circuits (14) of a heating system (1) with a controller (4) for determining an adjustment or reference variable (DX) to act on the heating circuit (14), **characterised in that** the controller (4) has a module (5) for calculating heater heat output reserves (HLR_HK; BLV_HK) from heater temperature values ($T_{HKS}$, $T_{RLS}$, $T_{VL}$), a module (6) for calculating a heating circuit heat output reserve (HLR; BLV) from the individual heater heat output reserves (HLR_HK; BLV_HK) and a module (8) for determining a target heat output reserve (XS_HLR; XS_BLV) and for evaluating a standard deviation (e) between the target heat output reserve (XS_HLR; XS_BLV) and the heater heat output reserve (HLR_HK; BLV_HK) for determining the adjustment or reference variable (DX).

11. The device according to claim 10, **characterised in that** measuring devices (3) connected to the heater (2) for recording the heater temperatures ($T_{HKS}$, $T_{RLS}$) and at least one associated data collector (19) are provided, wherein the data collector (19) is connected to the module (5) for calculating the heater heat output reserves (HLR_HK; BLV_HK).

12. The device according to claim 10 or 11, **characterised in that** at least one flow temperature sensor (17) is disposed at the flow line (15) of the heating circuit (17) of the heating system (1).

13. The device according to one of the claims 10 to 12, **characterised in that** the controller (4) is connected to the heating system (1).

14. The device according to one of the claims 10 to 13, **characterised in that** the connection between the individual modules, measuring devices and/or the data collector(s) is a radio link.

**Revendications**

1. Procédé pour l'ajustage de la réserve de puissance de chauffe dans un circuit de chauffage (14) d'une installation de chauffage (1), **caractérisé en ce qu'**une réserve de puissance de chauffe d'un élément de chauffage (HLR_HK ; BLV_HK) est déterminée pour plusieurs éléments de chauffage (2) d'un circuit de chauffage (14) de l'installation de chauffage (1) et une réserve de puissance de chauffe de circuit de chauffage (HLR ; BLV) est déterminée comme grandeur de réglage à partir des différentes réserves de puissance de chauffe d'élément de chauffage (HLR_HK ; BLV_HK), une réserve théorique de puissance de chauffe (XS_HLR ; XS_BLV) est déterminée comme valeur théorique de la réserve de puissance de chauffe du circuit de chauffage (HLR ; BLV) et une grandeur de guidage ou de correction (DX) pour agir sur le circuit de chauffage (14) est déterminée à partir de l'écart entre la grandeur de réglage de réserve de puissance de chauffe du circuit de chauffage (HLR ; BLV) et la valeur théorique de la réserve théorique de puissance de chauffe (XS_HLR ; XS_BLV).

2. Procédé selon la revendication 1, **caractérisé en ce que** la réserve de puissance de chauffe de l'élément de chauffage (HLR_HK ; BLV_HK) pour chaque élément de chauffage (2) est déterminée à partir de températures ($T_{HKS}$, $T_{RLS}$, $T_{VL}$) mesurées pour l'élément de chauffage (2).

3. Procédé selon la revendication 1 ou 2, **caractérisé en ce que** la réserve de puissance de chauffe du circuit de chauffage (HLR ; BLV) est calculée par formation de moyenne pondérée ou application d'une logique floue à partir des réserves de puissance de chauffe de l'élément de chauffage (HLR_HK ; BLV_HK).

4. Procédé selon l'une quelconque des revendications précédentes, **caractérisé en ce qu'**une variation de la température aller ($T_{VL}$) et/ou du flux massique (m) du circuit de chauffage (14) est utilisée comme grandeur de correction (DX).

5. Procédé selon l'une quelconque des revendications 1 ou 3, **caractérisé en ce qu'**une variation de la valeur théorique de la température aller ($T_{VL}$) et/ou du flux massique (m) est utilisée comme grandeur de correction (DX).

6. Procédé selon l'une quelconque des revendications 1 ou 3, **caractérisé en ce que** la valeur théorique de la température aller ($T_{VL}$) et/ou du flux massique (m) est utilisée comme grandeur de guidage (DX).

7. Procédé selon l'une quelconque des revendications précédentes, **caractérisé en ce que** la réserve théorique de puissance de chauffe (XS_HLR ; XS_BLV) pour le circuit de chauffage (14) est guidée de façon glissante en fonction de la température extérieure ($T_A$), de la température aller ($T_{VL}$) et/ou de l'heure du jour (t).

8. Procédé selon l'une quelconque des revendications précédentes, **caractérisé en ce que** la dépendance vis-à-vis du temps de la réserve théorique de puissance de chauffe (XS_HLR ; XS_BLV) pour le circuit de chauffage (14) est acquise en fonction du type de jour et de l'heure du jour.

9. Procédé selon l'une quelconque des revendications précédentes, **caractérisé en ce que** la grandeur de correction ou de guidage (DX) est déterminée à partir de l'écart de réglage (e) entre la réserve de puissance de chauffe du circuit de chauffage (HLR_HK ; BLV_HK) et la réserve théorique de puissance de chauffe (XS_HLR ; XS_BLV) au moyen d'une loi de réglage P ou PI et/ou d'algorithmes quasi-stationnaires.

10. Dispositif pour l'ajustage de la réserve de puissance de chauffe dans un circuit de chauffage (14) ou plusieurs circuits de chauffage (14) d'une installation de chauffage (1) avec un régulateur (4) pour la détermination d'une grandeur de correction ou de guidage (DX) pour agir sur le circuit de chauffage (14), **caractérisé en ce que** le régulateur (4) présente un module (5) pour le calcul de réserves de puissance de chauffe d'élément de chauffage (HLR_HK ; BLV_HK) à partir de valeurs de température d'élément de chauffage ($T_{HKS}$, $T_{RLS}$, $T_{VL}$), un module (6) pour le calcul d'une réserve de puissance de chauffe du circuit de chauffage (HLR ; BLV) à partir des différentes réserves de puissance de chauffe d'élément de chauffage (HLR_HK ; BLV_HK) et un module (8) pour le calcul d'une réserve théorique de puissance de chauffe (XS_HLR ; XS_BLV) et pour l'analyse d'un écart de réglage (e) entre la réserve théorique de puissance de chauffe (XS_HLR ; XS_BLV) et la réserve de puissance de chauffe d'élément de chauffage (HLR_HK ; BLV_HK) pour le calcul de la grandeur de correction ou de guidage (DX).

11. Dispositif selon la revendication 10, **caractérisé en ce que** des dispositifs de mesure (3) raccordés aux éléments de chauffage (2) pour l'acquisition des températures d'élément de chauffage ($T_{HKS}$, $T_{RLS}$) et au moins un collecteur de données (19) relié au dispositif sont prévus, le collecteur de données (19) étant relié au module (5) pour le calcul des réserves de puissance de chauffe d'élément de chauffage (HLR_HK ; BLV_HK).

12. Dispositif selon la revendication 10 ou 11, **caractérisé en ce qu'**au moins un capteur de température aller (17) est disposé sur le circuit aller (15) du circuit de chauffage (17) de l'installation de chauffage (1).

13. Dispositif selon l'une quelconque des revendications 10 à 12, **caractérisé en ce que** le régulateur (4) est relié à une installation de chauffage (1).

14. Dispositif selon l'une quelconque des revendications 10 à 13, **caractérisé en ce que** la liaison entre les différents modules, des dispositifs de mesure et/ou le ou les collecteur(s) de données est une liaison radio.

Fig. 1

Fig. 2

Fig. 3

Fig. 4

**Fig. 5**

[%] (y-axis)

Heizkörperleistungsreserve

Heizkörperbetriebsleistungsverhältnis

logarithmische Übertemperatur [K]

**Fig. 6**

[%] (y-axis)

Soll-Betriebsleistungsverhältnis

Soll-Heizleistungsreserve

Außentemperatur [°C]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1456727 B1
- EP 1645928 A1

- DE 102006013098 B3